Europäisches Patentamt

European Patent Office

Office européen des brevets

(19)

(11) Veröffentlichungsnummer: **0 009 087**
**A1**

## (12) EUROPÄISCHE PATENTANMELDUNG

(21) Anmeldenummer: 79102482.1

(22) Anmeldetag: 16.07.79

(51) Int. Cl.³: **G 11 B 5/58**

(30) Priorität: 22.09.78 DE 2841381

(43) Veröffentlichungstag der Anmeldung: 02.04.80
Patentblatt 80/7

(84) Benannte Vertragsstaaten: **AT BE CH FR GB IT NL**

(71) Anmelder: **SIEMENS AKTIENGESELLSCHAFT Berlin
und München, Postfach 22 02 61, D-8000
München 22 (DE)**

(72) Erfinder: **Wentzel, Peter, Dipl.-Ing., Eupenstrasse 12,
D-8900 Augsburg (DE)**
Erfinder: **Elting, Hermann, Kerschensteinerstrasse 258,
D-8034 Unterpfaffenhofen (DE)**

(54) Schaltungsanordnung zur Lageregelung eines Datenkopfes in einem Plattenspeicher.

(57) Schaltungsanordnung zur Lageregelung eines Datenkopfes (2) in einem Plattenspeicher (1) mit einer gemeinsamen Auswerteschaltung (18) für die Servosignale der Servooberfläche und die Servosignale der Servosektoren auf den Datenflächen.

EP 0 009 087 A1

SIEMENS AKTIENGESELLSCHAFT          Unser Zeichen
Berlin und München                  VPA 78 P 2 0 6 6 EUR

Schaltungsanordnung zur Lageregelung eines Datenkopfes
in einem Plattenspeicher

Die Erfindung bezieht sich auf eine Schaltungsanordnung zur Lageregelung eines Datenkopfes über der Mitte einer Datenspur in einem Magnetplattenspeicher, bei dem Positionssignale sowohl aus einer separaten Servofläche als auch aus Servosektoren auf den Datenflächen abgeleitet werden und bei dem durch Differenzbildung der beiden Positionssignale ein analoger Korrekturwert erzeugt und zu den Positionssignalen von der Servofläche addiert wird.

In Plattenspeichern mit hoher Dichte der Aufzeichnungsspuren wird zur Lageregelung der Schreib-/Leseköpfe ein Verfahren angewendet, das unter dem Begriff "Servotracking" bekannt wurde. Servotracking ist ein Spurfolgeverfahren, bei dem das Lagefehlersignal für die Magnetköpfe von einer auf dem Plattenstapel aufgeschriebenen Servoinformation abgeleitet wird. Das Verfahren der Positionsbestimmung relativ zum Aufzeichnungsträger erlaubt es, auch Plattenspeicher mit hoher Dichte der Aufzeichnungsspuren als Wechselplattenspeicher auszuführen.

Kar 1 Sur / 20.9.1978

Bei dem am weitesten verbreiteten Verfahren des Servotracking ist nur eine einzige Oberfläche des Plattenstapels mit Servoinformationen beschrieben. Diese Servoinformation wird von einem Servokopf gelesen. Aus den Servosignalen wird das Fehlersignal der Servokopfposition und der Synchronisationstakt für den Schreiboszillator abgeleitet. Das Positionssignal ist während der Feinregelphase Steuersignal für den Leistungsverstärker des Linearmotors; in der Grobregelphase dient es zum Zählen der gekreuzten Datenzylinder. Ein Problem ist bei diesem Verfahren die Aufgabe, die Datenköpfe der verschiedenen Geräte so genau zum Servokopf zu justieren, daß ein Stapeltausch untereinander auch bei gesteigerten Spurdichten möglich ist.

Eine bekannte Anordnung umgeht das Problem der Kopfjustage dadurch, daß der Plattenstapel, die Datenköpfe und die Führungsmechanik der Köpfe zu einem Datenmodul integriert sind. Als nachteilig muß der hohe Preis des Datenmoduls gesehen werden. Außerdem bleiben noch Toleranzprobleme aufgrund von Führungsungenauigkeiten und Tempe-ratureffekten bestehen, so daß auch mit dieser Technik eine Steigerung der Spurdichte auf zukünftig erforderliche Werte mit vertretbarem Aufwand nicht möglich erscheint. Dasselbe gilt auch für ein entsprechendes Feststapelkonzept.

Ferner ist eine Regeleinrichtung bekannt geworden, bei der die Servoinformation unter die Daten gemischt ist. In einer ausgeführten Einrichtung ist der Stapel in 128 feste Datensektoren aufgeteilt. Zwischen den Datensektoren befinden sich ebenfalls 128 schmale Servosektoren. Die sektorierte Servoinformation dient nur zur individuellen Feinregelung jedes einzelnen Datenkopfes. Zur Grobpositionierung der Köpfe wird ein an der Positioniermechanik angebrachter, optischer Weggeber verwendet.

Servooberfläche und Servokopf werden dabei eingespart. Der entscheidende Vorteil des Verfahrens liegt in der getrennten Lagefehlerbestimmung eines jeden Datenkopfes bezüglich der ausgewählten Datenspur.

Folgende Punkte schränken aber die Brauchbarkeit dieser bekannten Regeleinrichtung stark ein: a) Die Datenzylinder sind fest sektoriert. b) Aufgrund der Temperaturdehnungen am Plattenstapel und den Kopftragarmen beträgt die Ungenauigkeit der Grobpositionierung mehrere Spurabstände. Die Feinregeleinrichtung muß deshalb in der Lage sein, den Positionierer über einen größeren Spurbereich zu verschieben. Dies erfordert beachtlichen Schaltungsaufwand und zusätzliche Positionierzeit. c) Eine Feinregelung mit hoher Bandbreite, die zur Ausregelung von Stapelexzentrizitäten wichtig ist, kann nur realisiert werden, wenn viele Servosektoren zur Bildung des Lagefehlersignals zur Verfügung stehen. Diese Forderung kostet Speicherplatz und ergibt zudem eine enge Sektorierung des Datenfeldes. d) Der Synchronisationstakt des Schreiboszillators muß von einer zusätzlichen Taktspur bzw. einem Taktgeber abgeleitet werden.

Zur Vermeidung dieser Nachteile sind auch bereits Systeme bekannt geworden, die die beiden bekannten Methoden folgendermaßen miteinander kombinieren (DAS 26 29 710, US-PS 3 994 016): Zur Korrekturwertbildung für die verschiedenen Datenköpfe sind alle Datenspuren mit mindestens einem schmalen Servosektor versehen. Die Servosektoren tragen ähnliche oder gleiche Servoinformation wie die Servooberfläche. Während der sogenannten Servozeit wird eine zweite Auswertschaltung freigegeben. Sie bildet aus den Datenspur-Servosignalen ein Positionssignal für den von der Leseelektronik ausgewählten Datenkopf. Dieses Datenkopf-Positionssignal wird in einem Differenzverstärker mit dem Positionssignal des Servokopfes verglichen. Als Vergleichsergebnis entsteht eine Fehlerspannung, die den Lagefehler des lesenden Datenkopfes relativ zum Servokopf anzeigt. Die Lagefehlerspannung wird durch einen Übernahmetakt in einen Haltekreis übernommen und dient schließlich als Korrektursignal für die Position des Servokopfes. Die Lagekorrektur des Servokopfes geschieht dadurch, daß das Korrektursignal in einem Summierverstärker unter Beachtung des richtigen Vorzeichens zu dem Positionssignal des Servokopfes addiert wird. Dies täuscht der Positionsregelung einen Lagefehler des Servokopfes entsprechend der Korrekturspannung vor. Als Reaktien darauf verschiebt die Regelung den Servokopf so weit aus der Spurmitte, bis die Summe aus Korrekturwert und Positionssignal wieder oV beträgt und damit der lesende Datenkopf in die gewünschte Position gelangt.

Diese bekannten Anordnungen haben aber noch den Nachteil, daß außer der Schaltungsanordnung für die Erzeugung der Positionssignale des Servokopfes zusätzlich noch eine Schaltungsanordnung vorgesehen werden muß, die die Positionssignale für den ausgewählten Datenkopf aus den Servosignalen der Servosektoren auf den Datenflächen erzeugt. Diese zusätzliche Schaltungsanordnung stellt einen beachtlichen Aufwand dar. Der Erfindung lag daher die Aufgabe zugrunde, eine Schaltungsanordnung zu schaffen, die diesen Aufwand weitgehend reduziert. Erfindungsgemäß wird dies dadurch erreicht, daß für die Servosignale der Servooberfläche und die Servosignale der Servosektoren auf den Datenflächen eine gemeinsame Ausschaltung vorgesehen ist. Diese Auswerteschaltung arbeitet im Bereich der Datensektoren mit dem Servokopf zusammen und bildet aus dessen Signalen das Servokopf-Positionssignal und arbeitet im Bereich der Servosektoren mit dem jeweils ausgewählten Magnetkopf zusammen und bildet aus dessen Signalen das Positionssignal des ausgewählten Datenkopfes.

Eine besonders vorteilhafte Lösung ergibt sich durch eine Schaltungsanordnung, bei der kurz bevor die Servosektoren unter den Datenköpfen erscheinen, der aktuelle Wert des Servokopf-Positionssignales in einen Halteschaltkreis übernommen und der Korrekturwert durch Subtraktion des Inhaltes des im Halteschaltkreis gespeicherten Wertes des Servokopf-Positionssignals vom Datenkopf-Positionssignal gebildet wird.

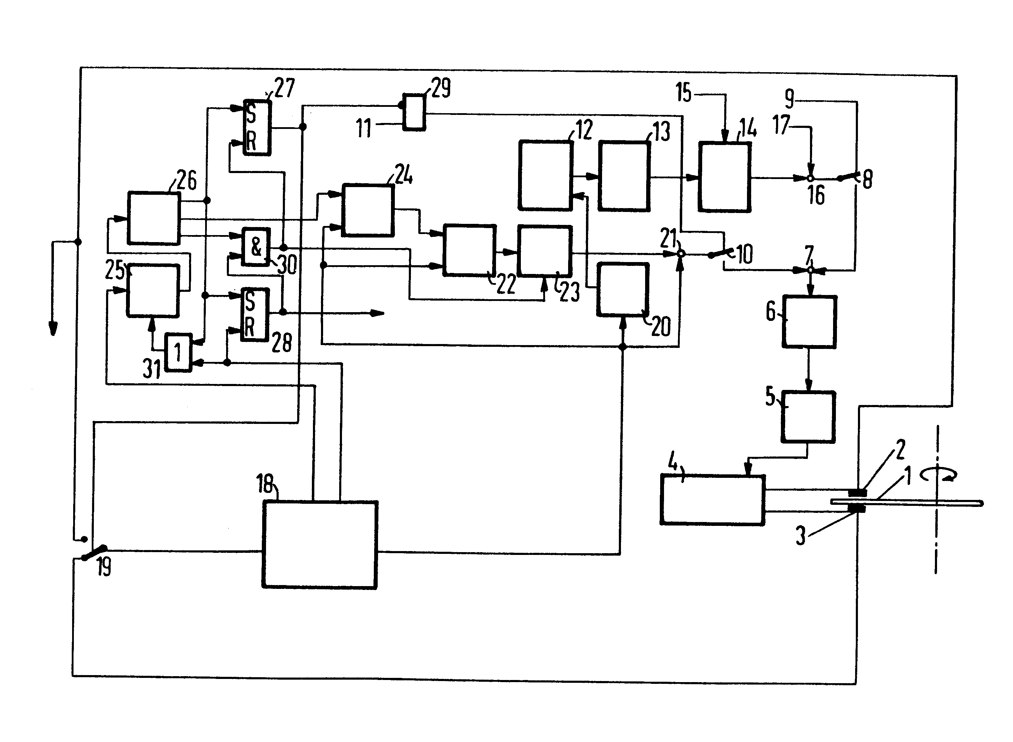

Weitere Einzelheiten der Erfindung ergeben sich aus der nachfolgenden Beschreibung eines Ausführungsbeispieles, wie es in der Zeichnung dargestellt ist.

Die Anordnung besteht zunächst aus einem Plattenstapel, der hier symbolisch in Form nur einer einzigen Platte 1 angedeutet ist, über der mit Hilfe eines Positionierers 4 ein Datenkopf 2 und ein Servokopf 3 in die gewünschte Lage gebracht werden können. Der Positionierer 4 wird von einem Leistungsverstärker 5 angesteuert, der seine Eingangssignale von einem Summierverstärker 6 erhält.

Am Summierungspunkt 7 treffen in bekannter Weise der Grobregelkreis und der Feinregelkreis zusammen. Zur wahlweisen Anschaltung eines der beiden Regelkreise dienen die Schalter 8 und 10, wobei der Schalter 8 mit Hilfe von Signalen auf der Leitung 9 geschlossen werden kann, um den Grobregelkreis wirksam werden zu lassen, und wobei der Schalter 10 durch Signale auf der Leitung 11 geschlossen werden kann, um den Feinregelkreis wirksam werden zu lassen.

Der Grobregelkreis enthält ein sogenanntes Spurdifferenzregister 12, welches an seinem Ausgang ein digitales Signal für die Differenz von der aktuellen Spur bis zur gewünschten Spur liefert. Ein Digital/Analog-Wandler 13 erzeugt aus diesem digitalen Signal ein äquivalentes Analogsignal, welches in bekannter Weise einem Funktionsgenerator 14 zugeleitet wird, der daraus die zum Erreichen der Zielspur erforderliche optimale Bremsfunktion bildet. Dem Funktionsgenerator 14 wird über eine Leitung 15 außerdem ein Signal für die gewünschte Positionierrichtung zugeführt. Das Ausgangssignal des Funktionsgenerators 14 wird schließlich an einem Summierungspunkt 16 mit einem die Istgeschwindigkeit des Positionierers 4 repräsentierenden Signal auf der Leitung 17 summiert.

Der Feinregelkreis enthält eine bekannte Auswerteschaltung 18 zum Erzeugen von Positionssignalen. Die Positionssignale von der Auswerteschaltung 18 dienen zum einen während der Grobregelphase dazu, mit Hilfe einer Einrichtung 20 sogenannte Zylinderimpulse zum Zurücksetzen des Spurdifferenzregisters 12 im Grobregelkreis zu erzeugen. Sie werden aber außerdem während der Feinregelphase an einen Summierpunkt 21 und von dort über den Schalter 10 an den Summierungspunkt 7 am Eingang des Summierverstärkers geliefert.

Zum Ausgleichen von Positionsdifferenzen zwischen dem Servokopf und den Datenköpfen wird in bekannter Weise an den Summierungspunkt 22 ein Korrektursignal geliefert, welches mit Hilfe eines Differenzverstärkers 22 aus dem Positionssignal des Servokopfes 3 und dem Positionssignal des Datenkopfes 2 gebildet und in einem Halteschaltkreis 23 gespeichert worden ist.

Im Gegensatz zu den bekannten Anordnungen wird aber zum Zwecke der Aufwandverringerung bei dem dargestellten Ausführungsbeispiel der Schaltungsanordnung gemäß der Erfindung das Servokopf-Positionssignal und das Datenkopf-Positionssignal mit ein und derselben Auswerteschaltung 18 erzeugt. Damit die Auswerteschaltung 18 im Bereich der Datensektoren mit dem Servokopf 3 zusammenarbeiten und aus dessen Signalen das Servokopf-Positionssignal erzeugen kann, und im Bereich der Servosektoren mit dem jeweils ausgewählten Datenkopf 2 zusammenarbeiten und aus dessen Signalen das Positionssignal des ausgewählten Datenkopfes bilden kann, wird kurz bevor die Servosektoren unter dem Datenkopf 2 erscheinen der aktuelle Wert des Servokopf-Positionssignales vom Ausgang der Auswerteschaltung 18 in einen Halteschaltkreis 24 übernommen, dessen Analogeingang zu diesem Zweck direkt mit dem Ausgang der Auswerteschaltung 18 verbunden ist. Der dann in dem Halteschaltkreis 23 zu speichernde und später dem Summierungspunkt 21 zuzuführende Korrekturwert wird mit Hilfe des Differenzverstärkers 22 durch Subtraktion des im Halteschaltkreis 24 gespeicherten Wertes des Servokopf-Positionssignales vom nunmehr von der Auswerteschaltung 18 gelieferten Datenkopf-Positionssignales gebildet.

Dazu ist es natürlich zunächst notwendig, die Auswerteschaltung 18 mit Hilfe des Schalters 19 an den Datenkopf 2 anzuschalten. Die zeitlich richtige Anschaltung der Auswerteschaltung 18 an den Datenkopf 2 bzw. den Servokopf 3 und die Steuerung der zeitgerechten Übernahme des Servokopf-Positionssignals in den Halteschaltkreis 24 kann an sich auf vielerlei Weise erfolgen. Im dargestellten Ausführungsbeispiel wird dazu der ohnehin in dem Plattenspeicher vorhandene Byte-Zähler 25 in Verbindung mit einem Decoder 26 verwendet. Kurz bevor die Servosektoren auf den Datenflächen unter dem Datenkopf 2 erscheinen, wird der Halteschaltkreis 24 durch ein Signal vom Ausgang des Decoders 26 angesteuert und dadurch die Übernahme des aktuellen Servokopf-Positionssignals veranlaßt. Der Decoder 26 signalisiert anschließend an einem weiteren Ausgang auch noch den Beginn des Servosektors selbst. Mit diesem Ausgangssignal des Decoders 26 werden zum einen zwei bistabile Kippstufen 27 und 28 gesetzt und zum anderen der Bytezähler 25 zurückgesetzt. Das Ausgangssignal der bistabilen Kippstufe 28 kennzeichnet, daß sich der Datenkopf 2 nunmehr in dem Servosektorbereich der Oberfläche befindet und dient in bekannter Weise als Sperrsignal für die Schreibelektronik und zum Schutz der Servosektoren vor Zerstörung.

Das Ausgangssignal der bistabilen Kippstufe 27 steuert zum einen den Schalter 19 und schaltet damit die Auswerteschaltung 18 auf den Datenkopf 2. Zum anderen unterbricht es durch Ansteuerung eines Gatters 29 die Feinregelung während der Zeit der Korrekturwertbildung.

Wenn dann im Bereich der Servosektoren der Datenkopf 2 über den Schalter 19 an die Einrichtung 18 angeschlossen ist, dann bildet die Auswerteschaltung 18 zum einen Servosignale der Datenoberflächen, mit denen der Bytezähler 25 wieder hochgezählt wird und zum anderen das Positionssignal des ausgewählten Datenkopfes 2. Der Korrekturwert für das Positionssignal am Summierungspunkt 21 entsteht dann durch Subtraktion des in dem Halteschaltkreis 24 gehaltenen Wertes des Servokopf-Positionssignales vom dem jetzt von der Auswerteschaltung 18 gelieferten Datenkopf-Positionssignal mit Hilfe des Differenzverstärkers 22.

Der Takt für die Übernahme des am Ausgang des Differenzverstärkers 22 anstehenden Korrekturwertes in den Haltekreis 23 wird vorteilhafterweise wieder aus dem Bytezähler 25 abgeleitet. Dazu dient speziell das Ausgangssignal der bistabilen Kippstufe 28, welches über ein UND-Gatter 30 dem Halteschaltkreis 23 zugeleitet wird. Das Ausgangssignal dieser Kippstufe verhindert, daß eine Übernahme des Korrekturwertes dann erfolgt, wenn sich der Datenkopf 2 in dem sogenannten Datenbereich der Datenfläche befindet. Der Übernahmetakt ist gleichzeitig auch Rücksetzsignal für die bistabile Kippstufe 27 und bewirkt somit ein Zurückschalten des Schalters 19 und damit der Auswerteschaltung 18 auf den Servokopf 3.

Kurz nach dem Übernahmetakt meldet der in bekannter Weise von der Auswerteeinrichtung 18 gelieferte Servoindeximpuls den Beginn des Datenfeldes. Dies setzt den Bytezähler 25 über ein Gatter 31 zurück. Damit ist die Sperrung der Schreibelektronik gleichzeitig wieder aufgehoben.

Patentansprüche

1. Schaltungsanordnung zur Lageregelung eines Datenkopfes über der Mitte einer Datenspur in einem Magnetplattenspeicher, bei dem Positionssignale sowohl aus einer separaten Servofläche als auch aus Servosektoren auf den Datenflächen abgeleitet werden und bei dem durch Differenzbildung der beiden Positionssignale ein analoger Korrekturwert erzeugt und zu den Positionssignalen von der Servofläche addiert wird, d a d u r c h  g e - k e n n z e i c h n e t , daß für die Servosignale der Servooberfläche und die Servosignale der Servosektoren auf den Datenflächen eine gemeinsame Auswerteschaltung (18) vorgesehen ist.

2. Schaltungsanordnung nach Anspruch 1, d a d u r c h g e k e n n z e i c h n e t , daß die Auswerteschaltung (18) im Bereich der Datensektoren mit dem Servokopf (3) zusammenarbeitet und aus dessen Signalen das Servokopf-Positionssignal bildet und im Bereich der Servosektoren mit dem jeweils ausgewählten Datenkopf (2) zusammenarbeitet und aus dessen Signalen das Positionssignal des ausgewählten Datenkopfes bildet.

3. Schaltungsanordnung nach Anspruch 2, d a d u r c h g e k e n n z e i c h n e t , daß kurz bevor die Servosektoren unter den Datenköpfen (2) erscheinen der aktuelle Wert des Servokopf-Positionssignals in einen Halteschaltkreis (24) übernommen und der Korrekturwert durch Subtraktion (22) des im Halteschaltkreis (24) gespeicherten Wertes des Servokopf-Positionssignals vom Datenkopf-Positionssignal gebildet wird.

4. Schaltungsanordnung nach einem der Ansprüche 1 bis 3, d a d u r c h   g e k e n n z e i c h n e t , daß die Feinregelung während der Zeit der Korrekturwertbildung unterbrochen wird (29).

Bezugszeichenliste

| | |
|---|---|
| 1 | Platte |
| 2 | Datenkopf |
| 3 | Servokopf |
| 4 | Positionierer |
| 5 | Leistungsverstärker |
| 6 | Summierverstärker |
| 7 | Summierungspunkt |
| 8 | Schalter |
| 9 | Leitung |
| 10 | Schalter |
| 11 | Leitung |
| 12 | Spurdifferenzregister |
| 13 | Digital/Analog-Wandler |
| 14 | Funktionsgenerator |
| 15 | Leitung |
| 16 | Summierungspunkt |
| 17 | Leitung |
| 18 | Auswerteschaltung |
| 19 | Schalter |
| 20 | Zylinderimpulsgenerator |
| 21 | Summierungspunkt |
| 22 | Summierungspunkt/Differenzverstärker |
| 23 | Halteschaltkreis |
| 24 | Halteschaltkreis |
| 25 | Byte-Zähler |
| 26 | Decoder |
| 27 | Kippstufe |
| 28 | Kippstufe |
| 29 | Gatter |
| 30 | UND-Gatter |
| 31 | Gatter |

0009087 1/1

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A1 - 2 755 652 (IBM)<br>* Ansprüche 1 und 5 *<br><br>-- | |
| P,A | US - A - 4 135 217 (XEROX CORP.)<br>* Zusammenfassung *<br><br>-- | |
| D,A | DE - B2 - 2 629 710 (IBM)<br>* gesamtes Dokument *<br><br>-- | |
| D,A | US - A - 3 994 016 (HONEYWELL)<br>* gesamtes Dokument *<br><br>---- | |

**KLASSIFIKATION DER ANMELDUNG (Int.Cl.3)**

G 11 B    5/58

**RECHERCHIERTE SACHGEBIETE (Int. Cl.3)**

G 11 B    5/00

G 11 B    21/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 04-01-1980 | LEITHÄUSER |

EPA form 1503.1  06.78